# EUROPEAN PATENT SPECIFICATION

(11) **EP 0 450 681 B1**
(45) Date of publication and mention of the grant of the patent: **04.08.1993**
(21) Application number: 91200536.0
(22) Date of filing: 12.03.1991
(51) Int. Cl.: G01C 19/70

(54) **Dither spring assembly for laser gyroscope**
Schwingfederkonstruktion für Gyroskop
Assemblage de ressort de vibrations pour gyroscope

(30) Priority: 03.04.1990 GB 9007472
(43) Date of publication of application: 09.10.1991
(73) Proprietor: BRITISH AEROSPACE PUBLIC LIMITED COMPANY, Farnborough, Hants. GU14 6YU (GB)
(72) Inventor: Wooley, Michael J., Bracknell, Berkshire RG12 4XR (GB)
(74) Representative: Dowler, Edward Charles

(56) References cited:
- GB-A- 2 091 495
- GB-A- 2 098 404

## Description

This invention relates to laser gyroscopes, in particular to a dither spring assembly for laser gyroscopes.

A laser gyroscope may comprise a shaped block of dielectric material having a low temperature coefficient of expansion, for example Zerodur, in which there are machined the cavities for the laser beam or beams and to which there are fitted electrodes for generating the gas discharge which drives the laser beams(s), the mirrors for deflecting the beam(s) around the cavities and so on. As is known, a good way of reducing the effects of so-called "lock-in" of the counter-rotating laser beam components is to dither the gyroscope, ie oscillate it in a random or pseudo-random manner about its sensitive axis. For this, the block may be supported by a dither spring assembly which incorporates one or more piezo-electric transducer elements for generating the dither and possibly a further piezo-electric transducer element for deriving a signal representative of the dither motion and usable in electrical circuitry coupled to the gyroscope output for removing the dither component therefrom.

Each transducer may take the form of a flat plate of piezo-electric ceramic material having insulated electrodes on its two faces and having one face bonded to an appropriate surface within the dither spring (see e.g. the patent applications GB-A-2098404). In previously proposed arrangements, because one face of the plate is bonded to the dither spring, the electrode on that face is extended around, ie wrapped over, one edge of the plate and onto the opposite face, ie, so this face carries not only one of the electrodes but also the extension of the other, and then signal wires can be connected to the two electrodes on this face, eg, by soldering, and led out of the dither spring. A problem with this is that where the electrode wraps around the edge of the piezo-electric plate it is subject to cracking and in addition, the portion of the plate between the electrode on the bonded face and the extension of this electrode on the other face is not effective for generating or sensing the dither.

Accordingly the object of the invention is to achieve a more satisfactory arrangement of the electrodes and their connecting leads so as to ameliorate the noted problems.

According to the invention there is provided a laser gyroscope dither spring assembly including a piezo-electric transducer which comprises a member made of piezo-electric material, electrodes on respective faces of the member, and electrical conductors connected to the electrodes, characterised in that said electrical conductors include, for at least one of said electrodes, an electrically conductive sheet metal member laid on the electrode and adhesively bonded thereto and having a connection portion projecting out from the transducer to beyond the periphery of the corresponding face of the piezo-electric material member, there being a layer of insulating material on the outer surface of the sheet metal member.

Said sheet metal member and said layer of insulating material may be formed by a piece of plastics material sheet having an electrically conductive metal layer deposited on one surface thereof. For example, especially where the transducer electrodes are of silver, they could be formed from 25 µm thick polymide film (Kapton) having a 7 g (¹/4 ounce layer) of copper electrolytically deposited on one surface of the film. For chrome electrodes especially, it may be preferable to use the plastics material known by the registered trademark Melinex with a gold surface layer thereon.

For the adhesive bonding between the sheet metal layer and the electrode, it is preferable to use non-conductive epoxy adhesive (conductive adhesive may give too thick a glue-line) while controlling the amount of adhesive and the pressure applied between the layer and electrode during curing of the adhesive to ensure that, given the not entirely flat surface textures of the electrode and metal layer, there is substantial metal to metal contact.

For a better understanding of the invention, and to show how the same may be carried into effect, reference will be made, by way of example, to the accompanying drawings, in which:-
figures 1 and 2 are respectively a perspective view and an end view of a piezo-electric trandsducer, and
figure 3 is a plan view of part of a dither spring assembly incorporating the transducer of figures 1 and 2.

The transducer comprises a flat rectangular plate 1 made of piezo-electric ceramic material with symmetrical silver electrodes 2 deposited on respective opposite faces of the plate. Each electrode extends to a short distance in from each edge of the plate 1, ie, so as to leave a border 3 all around each electrode. On each electrode, there is laid a shaped piece of metal coated plastics material 4 with the metal 5 facing in towards the electrode. The piece 4 is bonded to the electrode by a thin layer of epoxy adhesive 6. During assembly, the amount of adhesive and the pressure applied while the adhesive is being cured were both carefully controlled so that, given the never entirely smooth surface texture of the electrode 2 and metal 5, there is substantial metal to metal contact and hence a good electrical coupling between them.

The metal layer 5 on the plastics film 4 is trimmed slightly smaller than the plastics film, ie, so it is the same size as the electrode while the plastics film is the same size as the plate 1 - this aids correct registration of film and plate whilst ensuring insulation of the metal layer.

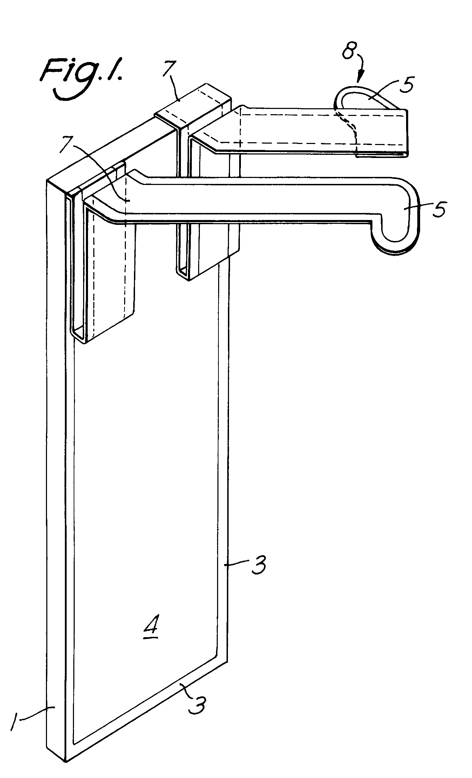

At one end of the plate, each metallised plastics film piece has an elongate projecting part 7 extending round and down along one face of the transducer and then up again to define a U-shaped or folded portion of the part 7 to give it greater flexibility. The part 7 then extends out from the transducer and has an end which is widened out to form an electrical connection pad. In one case, the end of part 7 is folded under as shown at 8 in figure 1 so as to bring the metal layer 5 to a position facing upwards - the metal layer on the other part 7 also facing upwards.

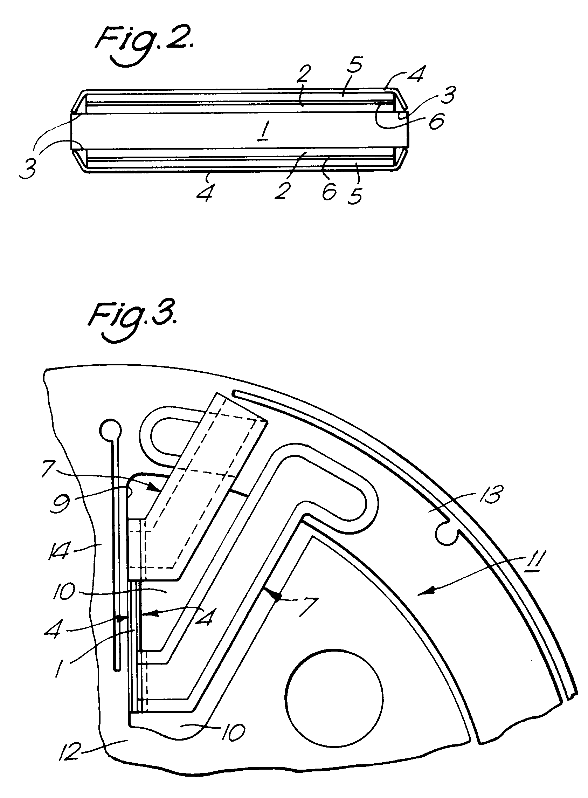

The transducer is bonded to one face of an aperture 10 formed in a dither spring 11 as shown in figure 3. The spring 11 comprises a cylindrical member made of Invar and electrical erosion machined to define a central mounting portion 12, a peripheral portion 13 for being secured in an axial bore in the Zerodur block body (not shown) of a laser gyroscope, and spring limb portions 14 coupling the portions 12 and 13 together.

The parts 7 of the metallised plastic film members 4, with the metallisation upwards, are bonded to the end of the spring as shown. There are thus defined two connection pads to which connecting wires may be soldered or otherwise fixed.

To make the transducer, the piezo-electric ceramic plate with its electrodes may be placed between two pre-cut pieces of metallised plastics film (metal side in) in a silicon rubber faced press which has locating pegs for accurately locating the plate and plastics pieces. The film could be 25 micron Kapton with a 7 g (¹/4 ounce), 9 µm electrolytically deposited copper layer or Melinex with a gold layer. The film piece could be etched and stamped from a larger sheet of the material. Between the films and electrodes, dots of epoxy adhesive, eg, EPO-TECH 353 ND, are placed. Pressure is then applied to the assembly and the adhesive cured by placing the press in an oven at 100°C. The best adhesive is one which tends to give a thin glue line - the quoted example was chosen for this.

## Claims

1. A laser gyroscope dither spring assembly including a piezo-electric transducer which comprises a member made (1) of piezo-electric material, electrodes (2) on respective faces of the member, and electrical conductors (5,7) connected to the electrodes, characterised in that said electrical conductors include, for at least one of said electrodes (2), an electrically conductive sheet metal member (5) laid on the electrode (2) and adhesively bonded thereto and having a connection portion (7) projecting out from the transducer to beyond the periphery of the corresponding face of the piezo-electric material member (1), there being a layer (4) of insulation material on the outer surface of the sheet metal member (5).

2. An assembly according to Claim 1, wherein said sheet metal member (5) and said layer of insulating material (4) are formed by a piece of plastics material sheet having an electrically conductive metal layer deposited on one surface thereof.

3. An assembly according to Claim 1 or 2 wherein to achieve the adhesive bonding between the sheet metal member and the electrode a non-conductive epoxy adhesive (6) is used, the amount of adhesive and the pressure applied between the member (5) and electrode (2) during curing of the adhesive being controlled to ensure that, given the not entirely flat surface textures of the electrode (2) and metal member (5), there is substantial metal to metal contact.

## Patentansprüche

1. Schwingfederkonstruktion für ein Lasergyroskop mit einem piezo-elektrischen Wandler, der einen Körper (1) aus piezo-elektrischem Material aufweist, mit Elektroden (2) auf den jeweiligen Oberflächen des Körpers und mit elektrischen Leitern (5, 7), die mit den Elektroden verbunden sind, dadurch gekennzeichnet, daß die elektrischen Leiter für wenigstens eine der Elektroden (2) ein elektrisch leitfähiges Metallblech (5) aufweisen, das über der Elektrode (2) liegt und mit dieser verklebt ist und einen Verbindungsabschnitt (7) aufweist, der über den Wandler bis über den Umfang der entsprechenden Fläche des aus piezoelektrischem Material bestehenden Körpers (1) vorsteht, und daß eine Schicht (4) aus Isoliermaterial auf der äußeren Oberfläche des Metallblechs (5) angeordnet ist.

2. Schwingfederkonstruktion nach Anspruch 1, bei welcher das Metallblech (5) und die Schicht aus Isoliermaterial (4) aus einem Plastilmaterialblatt bestehen, auf dem eine elektrisch leitfähige Metallschicht auf einer Oberfläche abgelagert ist.

3. Schwingfederkonstruktion nach den Ansprüchen 1 oder 2, bei welcher zur Erreichung der Verklebung zwischen dem Metallblech und der Elektrode ein nicht-leitender Epoxyd-Kleber (6) benutzt wird, wobei die Menge des Klebers und der zwischen dem Metallblech (5) und der Elektrode (2) während der Aushärtung des Klebers angewandte Druck so gesteuert werden, daß gewährleistet wird, daß bei nicht völlig flachen Oberflächentexturen der Elektrode (2) und des Metallbleches (5) dennoch eine beträchtliche Berührung Metall-Metall erfolgt.

## Revendications

1. Assemblage de ressort de vibration pour gyroscope à laser, comportant un transducteur piézo-électrique qui comprend un élément (1) en matériau piézoélectrique, des électrodes (2) sur les faces respectives de l'élément et des conducteurs électriques (5, 7) connectés aux électrodes, caractérisé en ce que lesdits conducteurs électriques comportent, pour au moins l'une desdites électrodes (2), un élément (5) en tôle conductrice de l'électricité placé sur l'électrode (2) et lié par adhésif à celle-ci, et ayant une partie de connexion (7) en saillie sur le transducteur jusqu'au-delà de la périphérie de la phase correspondante de l'élément (1) en matériau piézoélectrique, une couche (4) de matériau isolant se trouvant sur la surface extérieure de l'élément (5) en tôle.

2. Assemblage selon la revendication 1, dans lequel ledit élément (5) en tôle et ladite couche en matériau isolant (4) sont constitués d'un morceau d'une feuille de matière plastique ayant une couche de métal conducteur de l'électricité déposée sur l'une de ses surfaces.

3. Assemblage selon la revendication 1 ou 2, dans lequel, pour obtenir la liaison par adhésif entre l'élément en tôle et l'électrode, on utilise un adhésif en époxy non conductrice (6), la quantité de l'adhésif et la pression appliquée entre l'élément (5) et l'électrode (2) pendant la cuisson de l'adhésif étant contrôlées pour assurer que, étant donné que les textures des surfaces de l'électrode (2) et de l'élément en métal (5) ne sont pas entièrement plates, il y ait un contact important métal contre métal.
